# NEUE EUROPÄISCHE PATENTSCHRIFT

(11) **EP 1 727 261 B2**
(45) Veröffentlichungstag und Bekanntmachung des Hinweises auf die Entscheidung über den Einspruch: **26.06.2013**
(45) Hinweis auf die Patenterteilung: 31.10.2007
(21) Anmeldenummer: 05104339.6
(22) Anmeldetag: 23.05.2005
(51) Int. Cl.: H02K 3/50, H02K 11/00, H02K 3/52, H02K 5/22

(54) **Stator für einen Elektromotor**
Stator for an electric motor
Stator pour moteur électrique

(43) Veröffentlichungstag der Anmeldung: 29.11.2006
(73) Patentinhaber: ebm-papst Mulfingen GmbH & Co. KG, 74673 Mulfingen (DE)
(72) Erfinder: Best, Dieter, 74653 Ingelfingen (DE); Zierlein, Rainer, 97999 Igersheim (DE); Kinzel, Alexander, 74564 Crailsheim (DE); Fiedler, Erich, 91616 Neusitz (DE)
(74) Vertreter: Patentanwälte Dr. Solf & Zapf

(56) Entgegenhaltungen:
- EP-A- 0 727 864
- EP-A- 0 993 095
- EP-A- 1 134 876
- EP-A- 1 220 422
- DE-A1- 10 157 194
- DE-C2- 3 817 080

## Beschreibung

Die vorliegende Erfindung betrifft einen Stator für einen als Außenläufermotor angeführten Elektromotor, mit einem mit einer Statorwicklung versehenen Statorblechpaket und mit einer auf einer Stirnseite im Bereich eines Wickelkopfes der Statorwicklung angeordneten Verschaltungsanordnung zum elektrischen Verschalten von Wicklungsdrahtenden der Statorwicklung sowie von Anschlussdrähten eines der Statorwicklung vorgeschalteten Temperaturwächters.

Ein solcher Stator ist in der EP 0 993 095 A1/B1 beschrieben. Bei diesem bekannten Stator ist das Statorblechpaket an seinen beiden Stirnseiten sowie innerhalb von Statornuten, durch die die Statorwicklung gewickelt ist, mit einer isolierenden Kunststoffmasse umspritzt, die beidseitig eine Stirnisolation - dort "Isolier-Endscheiben" genannt - bildet. Auf einer Seite ist eine an die Endscheibe einstückig angeformte Aufnahme vorgesehen, in die ein Temperaturwächter axial eingesetzt ist. Der Temperaturwächter ist als Sicherungselement der Statorwicklung elektrisch in Reihe vorgeschaltet. Zum Verschalten von Wicklungsdrähten sowie von Anschlussdrähten des Temperaturwächters ist eine Verschaltungsanordnung mit mindestens einer Mehrfach-Kontaktkammer vorgesehen, die durch Teilkammern einerseits einer der Endscheiben und andererseits einer zusätzlichen wickelkopfseitig aufgesetzten Verdrahtungsplatte gebildet ist. In den Kontaktkammern sind Kontaktelemente in Form von Schneidklemmkontakten angeordnet. Die Verdrahtungsplatte weist im Bereich des Temperaturwächters eine Durchgangsöffnung sowie auf ihrer Oberseite Fixierelemente zur klemmenden Halterung der Anschlussdrähte des Temperaturwächters auf. Die Herstellung bzw. Montage des bekannten Stators erfolgt, indem die Wicklungsdrahtenden durch jeweils eine der Kontaktkammern geführt und dort durch Einsetzen von Schneidklemmkontakten kontaktiert werden. Es können dann Anschlussleitungen in die jeweiligen Kontakte eingedrückt werden. Der Temperaturwächter wird axial in die Aufnahme der Endscheibe eingesteckt, und seine Anschlussdrähte werden über die Verdrahtungsplatte geführt und dort fixiert sowie mit ihren Enden in entsprechende Schneidklemmkontakte eingeführt und dadurch kontaktiert.

Die EP 0 727 864 B1 beschreibt eine Verschaltungsanordnung für einen Elektromotor, wobei an einem scheibenförmigen Basisteil Verbinderelemente gehaltert sind, die zum Anschluss der Statorwicklungsdrahtenden jeweils eine Anschlussfahne mit einer Klemmzunge für das jeweilige Drahtende aufweisen. Dabei ist eine besondere Aufnahme- und Kontaktanordnung für einen knopfartigen, nach Art einer Knopfbatterie ohne Anschlussleitungen ausgebildeten Temperaturwächter vorgesehen, wobei diese Anordnung es ermöglicht, den Motor wahlweise mit oder ohne Temperaturwächter zu montieren. Dazu weist das Basisteil eine Aufnahme für den Temperaturwächter mit einem speziellen Kontaktfederelement auf, mit dem entweder der in die Aufnahme eingesetzte Temperaturwächter oder ein anstelle des Temperaturwächters zu verwendendes Verbinderelement kontaktiert werden kann. In einer Bodenwandung der Aufnahme ist eine Lochöffnung derart gebildet, dass der in der Aufnahme sitzende Temperaturwächter durch die Lochöffnung hindurch mit der Wärme der Statorwicklung beaufschlagt wird, und zwar nur mittelbar über einen Kontaktabschnitt eines Verbinderelementes und gegebenenfalls über eine zusätzliche Schaltungsisolation. Hierdurch ist der Wärmeübergang nicht optimal.

Der vorliegenden Erfindung liegt die Aufgabe zugrunde, einen Stator der eingangs beschriebenen Art zu schaffen, der bei vereinfachter Herstellung und Montage eine hohe Gebrauchssicherheit gewährleistet.

Erfindungsgemäß wird dies durch die Merkmale des Anspruchs 1 erreicht. Vorteilhafte Ausgestaltungsmerkmale der Erfindung sind Gegenstand der abhängigen Ansprüche.

Erfindungsgemäß ist somit der Temperaturwächter derart integriert in einer den Bereich des Wickelkopfes überdeckenden, kappenartig übergreifenden, isolierenden Schaltscheibe gehalten, dass er wickelkopfseitig in wärmeleitendem Anlagekontakt mit der Statorwicklung zwischen dieser und der Schaltscheibe sitzt. Dies bedeutet, dass der Temperaturwächter - vorzugsweise zusammen mit weiteren Kontaktelementen der Verschaltungsanordnung - derart vormontiert in der Schaltscheibe integriert gehalten ist, dass lediglich die so vorab bestückte Schaltscheibe axial auf das bewickelte Statorblechpaket aufgesetzt zu werden braucht. Der Temperaturwächter liegt dann in direktem Anlagekontakt wickelkopfseitig an der Statorwicklung an, was einen guten Wärmeübergang und dadurch eine hohe Sicherheit gewährleistet, indem der Temperaturwächter den Motor sicher bei Überhitzung abschaltet. Zudem ist der Temperaturwächter erfindungsgemäß mit einer federelastischen Andruckkraft beaufschlagt, wozu die Schaltscheibe im Bereich des Temperaturwächters einen die Andruckkraft erzeugenden Federarm aufweist. Durch diese Ausgestaltung wird ein Toleranzausgleich erreicht, indem eventuelle Maßtoleranzen, insbesondere Toleranzen der Wickelkopf-Aufbauhöhe, durch die Federbeaufschlagung des Temperaturwächters so ausgeglichen werden, dass in jedem Fall ein guter, direkter Wärmekontakt des Temperaturwächters an der Statorwicklung gewährleistet ist.

In vorteilhafter Ausgestaltung ist der Temperaturwächter mittels seiner Anschlussdrähte in der Schaltscheibe fixiert, wozu die Schaltscheibe auf ihrer dem Wickelkopf zugewandten Statorseite Fixierelemente zur Aufnahme und klemmenden Halterung der Anschlussdrähte aufweist.

In weiterer bevorzugter Ausgestaltung sind die Anschlussdrähte des Temperaturwächters unmittelbar in Schneidklemmtechnik angeschlossen. Dazu werden die Anschlussdrähte so in der Schaltscheibe fixiert, dass sie durch eine einfache Fügeverbindung durch axiales Aufsetzen der Schaltscheibe auf den Bereich des Wickelkopfes selbsttätig in Schneidklemmkontakten kontaktiert werden. Dies führt zu einer einfachen Montage des Stators.

Weitere vorteilhafte Ausgestaltungsmerkmale werden im Folgenden noch genauer erläutert werden.

Anhand eines bevorzugten, in der Zeichnung veranschaulichten Ausführungsbeispiels soll im Folgenden die Erfindung genauer erläutert werden. Dabei zeigen:
- Fig.1: eine axiale Ansicht (Draufsicht in Richtung der Motorachse) eines erfindungsgemäßen Stators auf dessen Rotorseite (Rotor nicht dargestellt),
- Fig. 2: einen Schnitt in der Ebene II ― II gemäß Fig. 1,
- Fig. 3: eine stark vergrößerte Detailansicht des Bereichs III gemäß Fig. 2 zur Erläuterung der Anordnung des Temperaturwächters,
- Fig. 4: eine Perspektivansicht von Bestandteilen des erfindungsgemäßen Stators,
- Fig. 5: eine Draufsicht in Pfeilrichtung V gemäß Fig. 4,
- Fig. 6: einen Querschnitt in der Ebene VI - VI gemäß Fig. 5 im Bereich eines Schneidklemmkontaktes,
- Fig. 7: eine Perspektivansicht einer Schaltscheibe nach der Erfindung, und zwar auf die vom Statorblechpaket wegweisende Seite (Flanschseite),
- Fig. 8: eine Ausschnittvergrößerung des Bereichs VIII in Fig. 7,
- Fig. 9: eine Perspektivansicht auf die andere Seite (Statorseite) der Schaltscheibe,
- Fig. 10: eine Ausschnittvergrößerung des Bereichs X in Fig. 9,
- Fig. 11: eine Draufsicht der Schaltscheibe (Flanschseite),
- Fig. 12: eine Seitenansicht der Schaltscheibe in Pfeilrichtung XII gemäß Fig. 11,
- Fig. 13: eine Draufsicht auf die andere Seite (Statorseite) der Schaltscheibe in Pfeilrichtung XIII gemäß Fig. 12,
- Fig. 14: einen stark vergrößerten Schnitt in der Ebene XIV - XIV in Fig. 11,
- Fig. 15: eine vergrößerte Perspektivansicht auf die Statorseite der Schaltscheibe analog zu Fig. 9,
- Fig. 16 bis 18: jeweils eine Detailansicht der Schaltscheibe.

In den verschiedenen Figuren der Zeichnung sind gleiche Teile stets mit den gleichen Bezugszeichen versehen und brauchen daher in der Regel auch jeweils nur einmal beschrieben zu werden.

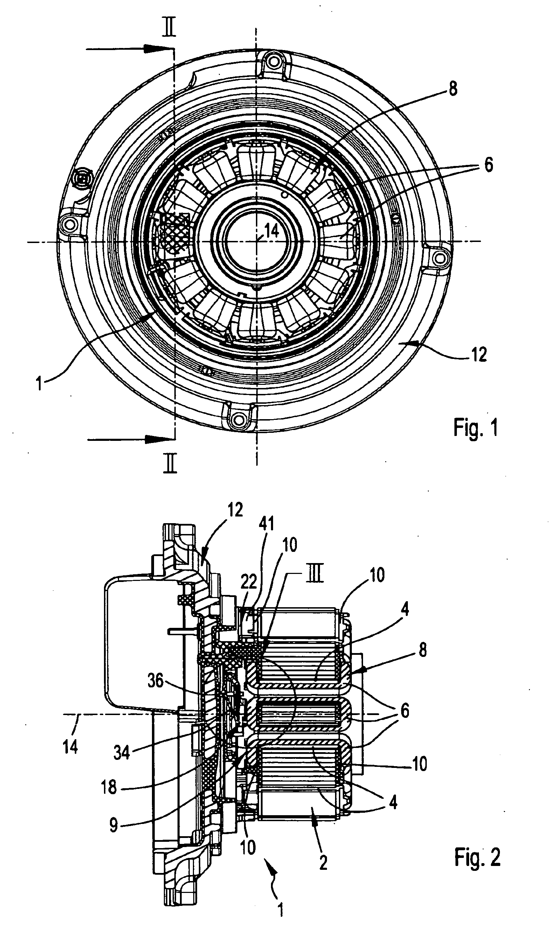

Wie sich zunächst aus den Fig. 1 bis 4 ergibt, besteht ein erfindungsgemäßer Stator 1 aus einem Statorblechpaket 2 mit Statornuten 4, durch die jeweils Teilwicklungen 6 einer Statorwicklung 8 verlaufen. Das aus geschichteten Blechlamellen bestehende Statorblechpaket 2 ist an seinen beiden Stirnseiten sowie innerhalb der Nuten mit einem isolierenden Kunststoffmaterial umspritzt. Dies dient einerseits zur Isolierung der Teilwicklungen 6 innerhalb der Statornuten 4 und andererseits zur Isolierung des sogenannten Wickelkopfes 9 im Bereich der Stirnseiten gegenüber dem Statorblechpaket 2. Bei diesem Teil der Isolierung des wickelkopfseitigen Bereiches handelt es sich um jeweils eine Stirnisolation 10.

Das mit der Statorwicklung 8 bewickelte Statorblechpaket 2 ist auf einer Stirnseite mit einem Motorflansch 12 fest verbunden. Dieser Motorflansch 12 erstreckt sich im Wesentlichen senkrecht zu einer Motorachse 14. In der bevorzugten Ausgestaltung für einen Elektro-Außenläufermotor wird das bewickelte Statorblechpaket 2 von seiner anderen, dem Motorflansch 12 gegenüberliegenden Stirnseite her von einem nicht dargestellten, topf- oder glockenförmigen Außenläufer umschlossen.

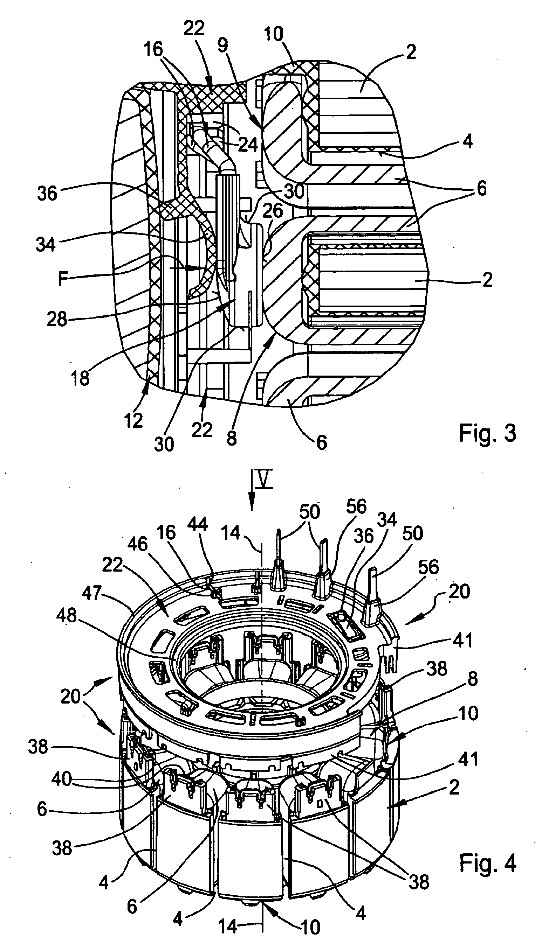

Der Stator 1 weist ferner zum elektrischen Verschalten von nicht bezeichneten Wicklungsdrahtenden der Statorwicklung 8 bzw. der Teilwicklungen 6 sowie von Anschlussdrähten 16 eines der Statorwicklung 8 in Reihe vorgeschalteten Temperaturwächters 18 eine Verschaltungsanordnung 20 auf (Fig. 4). Diese Verschaltungsanordnung 20 ist auf der Seite des Motorflansches 12 zwischen diesem und dem bewickelten Statorblechpaket 2 angeordnet.

Erfindungsgemäß weist die Verschaltungsanordnung 20 eine den Bereich des flanschseitigen Wickelkopfes 9 des bewickelten Statorblechpaketes 2 kappenartig übergreifende, isolierende Schaltscheibe 22 auf. Die Schaltscheibe 22 weist eine zentrische Öffnung für eine Motorwelle bzw. für eine zugehörige Wellenlagerung auf (nicht dargestellt), so dass sie im Wesentlichen ringscheibenförmig ausgebildet ist. Erfindungsgemäß ist der Temperaturwächter 18 derart integriert in der Schaltscheibe 22 gehalten, dass er wickelkopfseitig in wärmeleitendem Anlagekontakt mit der Statorwicklung 8 zwischen dieser und der Schaltscheibe 22 sitzt. Hierzu wird insbesondere auf die vergrößerte Darstellung in Fig. 3 verwiesen.

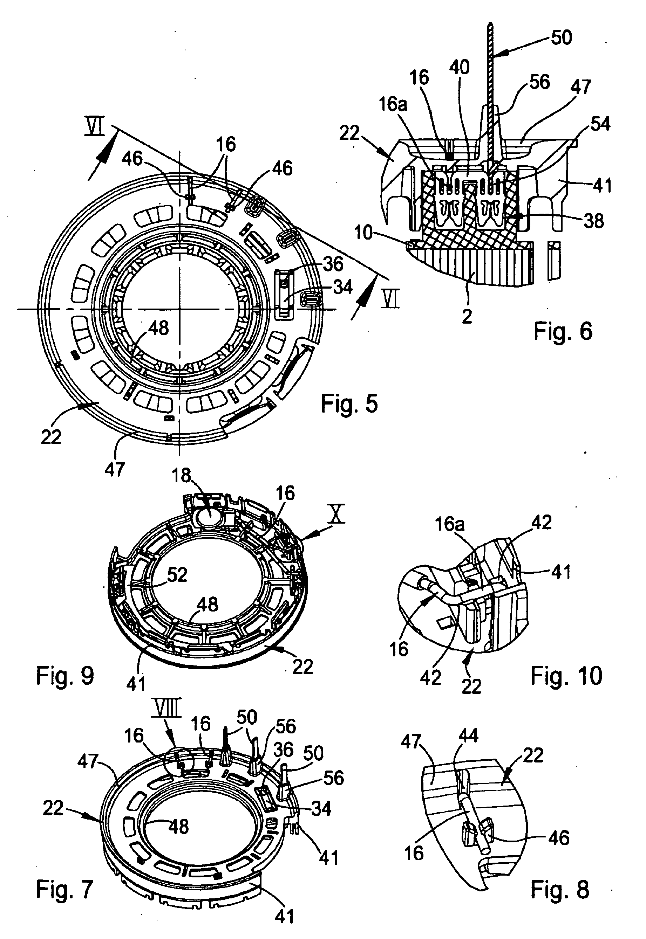

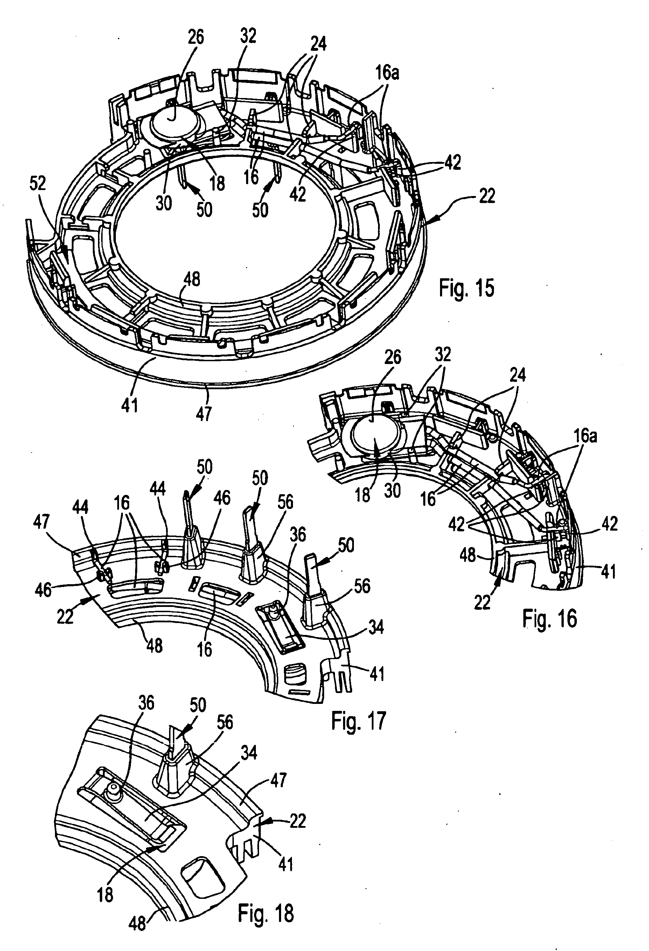

Wie sich nun weiter insbesondere aus den Detaildarstellungen in den Fig. 9 bis 18 ergibt, ist der Temperaturwächter 18 mittels seiner Anschlussdrähte 16 in der Schaltscheibe 22 fixiert. Dazu weist die Schaltscheibe 22 auf ihrer dem Stator-Wickelkopf 9 zugewandten Statorseite Fixierelemente 24 zur Aufnahme und klemmenden Halterung der Anschlussdrähte 16 auf. Die Fixierelemente 24 sind bevorzugt als Klemmaufnahmen ausgebildet, in die die Anschlussdrähte 16 auf einfache und schnelle Weise kraftformschlüssig eingedrückt bzw. eingerastet werden können. Hierzu wird insbesondere auf Fig. 15 und 16 verwiesen. Wie sich daraus weiter ergibt, weist der Temperaturwächter 18 eine flache, knopfartige Form mit gegenüberliegenden, zur Motorachse 14 etwa senkrecht verlaufenden Anlageflächen 26 und 28 (siehe hierzu Fig. 3) und einem seitlichen Umfangsrand 30 auf. Hierbei gehen die Anschlussdrähte 16 mit einem zu den Anlageflächen 26, 28 im Wesentlichen parallelen Verlauf von dem Umfangsrand 30 aus. In Fig. 15 und 16 ist weiter zu erkennen, dass der Temperaturwächter 18 in einem Aufnahmebereich der Schaltscheibe 22 sitzt und hier vorzugsweise über seitliche, beispielsweise stiftartige Postitionierelemente 32 lagerichtig so positioniert ist, dass er gemäß Fig. 3 genau auf dem Wickelkopf 9 einer der Teilwicklungen 6 zur unmittelbaren Auflage kommt.

Erfindungsgemäß ist der Temperaturwächter 18 mit einer federelastischen Andruckkraft F in Richtung der Statorwicklung 8 beaufschlagt. Dazu weist die Schaltscheibe 22 gemäß Fig. 3, 11, 17 und 18 im Bereich des Temperaturwächters 18 einen die Andruckkraft F erzeugenden Federarm 34 auf. Dieser Federarm 34 ist gemäß Fig. 18 durch eine etwa U-förmige Aussparung im Bereich einer Wandung der Schaltscheibe 22 gebildet. Dabei ist es weiterhin vorteilhaft, wenn der Federarm 34 auf seiner von dem Temperaturwächter 18 wegweisenden Seite ein bevorzugt stiftförmiges Anlageelement 36 zur abstützenden Anlage an einer flanschseitigen Gegenfläche aufweist (siehe Fig. 3). Dies dient zu einer Erhöhung der Andruckkraft F.

Der elektrische Anschlusskontakt der Anschlussdrähte 16 des Temperaturwächters 18 kann grundsätzlich auf beliebige Weise erfolgen, beispielsweise mittelbar über zusätzliche, z. B. angelötete oder angekrimpte Kontaktelemente, wie Flachstecker oder dergleichen.

In der dargestellten, besonders vorteilhaften Ausführungsform sind allerdings die Anschlussdrähte 16 des Temperaturwächters 18 unmittelbar in Schneidklemmtechnik angeschlossen. Diese bevorzugte Anschlusstechnik soll im Folgenden genauer erläutert werden.

Die der Verschaltungsanordnung 20 zugewandte Stirnisolation 10 weist einstückig angeformte Aufnahmekammern 38 mit darin eingesetzten Schneidklemmkontakten 40 auf (siehe insbesondere Fig. 4 und 6). Gemäß Fig. 4 sind die Aufnahmekammern 38 mit den Schneidklemmkontakten 40 am Außenumfang des Statorblechpaketes 2 über den Umfang verteilt angeordnet, wobei sie in axialer Richtung zur Schaltscheibe 22 hin zur Kontaktierung offen sind. Die Anschlussdrähte 16 des Temperaturwächters 18 sind gemäß Fig. 15 und 16 derart an der Schaltscheibe 22 fixiert, dass sie allein durch eine axiale Fügeverbindung der Schaltscheibe 22 durch Aufsetzen auf die Stirnisolation 10 selbsttätig in jeweils einen der Schneidklemmkontakte 40 eingeführt werden. Für diese Verbindung der Schaltscheibe 22 mit der Stirnisolation 10 weist die Schaltscheibe 22 einen sich axial erstreckenden Umfangsrand 41 auf, der gemäß Fig. 4 die axial vorstehenden Aufnahmekammern 38 bereichsweise übergreift. Dabei erfolgt zweckmäßig auch eine kraft- und/oder formschlüssige Fixierung der Schaltscheibe 22 an der Stirnisolation 10. Wie sich weiter insbesondere aus Fig. 15 und 16 ergibt ist jeder Anschlussdraht 16 des Temperaturwächers 18 mit einem bevorzugt abisolierten Kontaktabschnitt 16 a - siehe dazu auch die vergrößerte Detailansicht in Fig. 10 - insbesondere mit radialem Verlauf frei, brückenartig über zwei Abstützpunkte 42 geführt und fixiert. Dabei ist die Anordnung dieses freien, brückenartigen Kontaktabschnittes 16a an die Lage des zugehörigen Schneidklemmkontaktes 40 so angepasst, dass beim Aufsetzen der Schaltscheibe 22 selbsttätig die Kontaktverbindung erfolgt. Um hierbei die notwendige Abstützung des Kontaktabschnittes 16a zu erreichen und zu vermeiden, dass er bei der Fügeverbindung ausweichen könnte, ist jeder Anschlussdraht 16 in Verlängerung des Kontaktabschnittes 16a mit seinem Ende um 180° durch eine Öffnung 44 der Schaltscheibe 22 hindurch - siehe insbesondere Fig. 4, 6, 8 und 17 - auf deren gegenüberliegende, vom Statorblechpaket 2 wegweisende Flanschseite geführt und dort vorzugsweise in einer Klemmhalterung 46 fixiert (siehe insbesondere Fig. 8). Dabei liegt jede Öffnung 44 innerhalb des von dem Umfangsrand 41 umschlossenen Scheibenbereichs, so dass die Anschlussdrähte 16 und deren Kontaktabschnitte 16a in radialer Richtung nach außen isolierend abgedeckt sind. Dabei ist es gemäß Fig. 4, 7, 8, 14, und 17 zudem vorteilhaft, wenn die Schaltscheibe 22 auf ihrer vom Statorblechpaket 2 wegweisenden Flanschseite einen etwa in axialer Verlängerung des Umfangsrandes 41 angeordneten Umfangssteg 47 aufweist, um auch auf dieser Seite die Drähte 16, 16a radial nach außen abzuschirmen. Ebenfalls zur Verlängerung von Kriechstrecken (Vermeidung von Kriechströmen) ist bevorzugt im inneren Umfangsbereich der ringscheibenförmigen Schaltscheibe 22 ein die zentrische Öffnung umschließender Ringstegansatz 48 gebildet, der sich bevorzugt zur Statorseite hin, d. h. in Richtung des Statorblechpaketes 2, erstreckt.

In weiterer Ausgestaltung sind mit Vorteil an der Schaltscheibe 22 zusätzliche Kontaktelemente gehaltert, und zwar insbesondere Anschlusskontakte 50 für die Verbindung mit nicht dargestellten äußeren Anschlussleitungen bzw. mit einer Leiterplatte sowie mindestens eine Kontaktbrücke 52 zur Verbindung zwischen mindestens zwei, wie dargestellt z. B. drei Verschaltungspunkten.

Diese Kontaktelemente 50, 52 weisen jeweils flachsteckerartige Verbindungsabschnitte 54 derart auf, dass diese jeweils direkt in einen der Schneidklemmkontakte 40 der Stator-Stirnisolation 10 eingreifen. Hierzu wird insbesondere auf Fig. 6 hingewiesen.

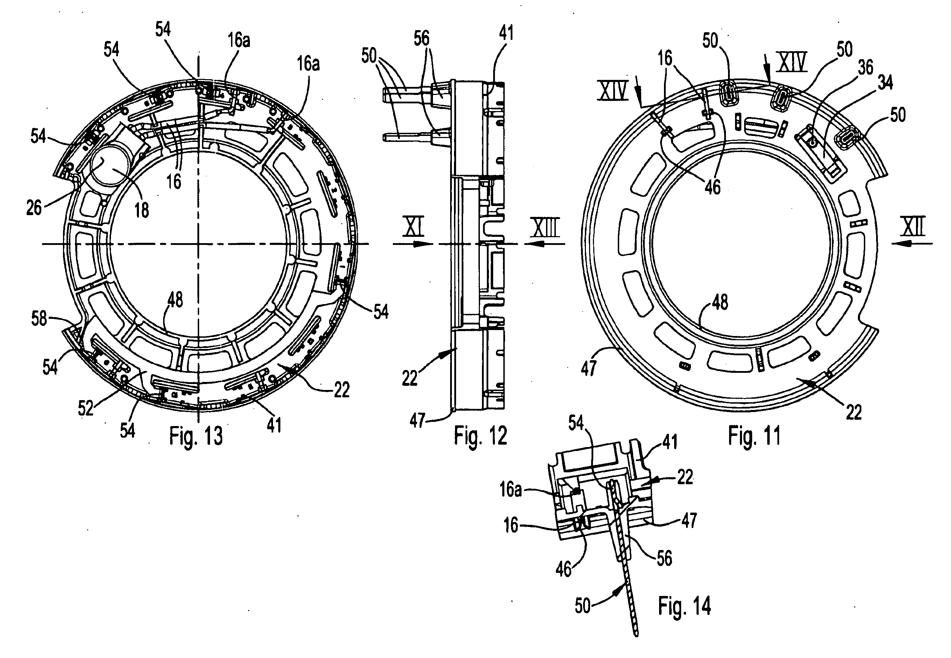

Die Anschlusskontakte 50 sind bevorzugt stiftförmig und axial verlaufend ausgebildet und hierbei vorzugsweise in die aus Kunststoff bestehende Schaltscheibe 22 bereichsweise eingepresst oder eingespritzt. Zur guten, festen Halterung kann hierfür die Schaltscheibe 22 gemäß Fig. 6 und 14 verlängerte, angeformte Halteabschnitte 56 aufweisen. Die Kontaktbrücke 52 ist gemäß Fig. 13 als ein in eine Aufnahme der Schaltscheibe 22 positionsgenau eingesetztes Flachleiterlelement ausgebildet. Zweckmäßig kann die Kontaktbrücke 52 als Blechformteil ausgebildet sein, wobei die Verbindungsabschnitte 54 jeweils etwa rechtwinklig in Anschlussrichtung umgebogen sind. Das positionsgenaue Einsetzen der Kontaktbrücke 52 in die Schaltscheibe 22 erfolgt, indem es zunächst einendig gegen eine Einführschrägfläche 58 angelegt und dann hebelartig in die Schaltscheibe 22 hineingeschwenkt (eingehebelt) wird, wobei die Schrägfläche 58 die genaue Positonierung der Verbindungsabschnitte 54 relativ zu den zugehörigen Schneidklemmkontakten 40 bewirkt.

Die Kontaktierung der in den Zeichnungsfiguren nicht erkennbaren Wicklungsdrahtenden der Statorwicklung 8 erfolgt ebenfalls in den Schneidklemmkontakten 40. Wie sich aus Fig. 6 ergibt, können jeweils zwei Schneidklemmkontakte 40 über einen Verbindungssteg zu einem Doppelkontakt zusammengefasst sein. Jeder Schneidklemmkontakt 40 weist eine etwa H-förmige Ausgestaltung mit einem unteren Wicklungsdrahtkontakt und einem oberen Verschaltungskontakt auf. Dabei sind die Wicklungsdrahtenden der Statorwicklung 8 zuerst durch jeweils eine der Aufnahmekammern 38 radial geführt. Durch axiales Einsetzen des jeweiligen Schneidklemmkontaktes 40 erfolgt die Kontaktierung des Wicklungsdrahtendes. Die Kontakte 40 sind dann zum Aufsetzen der erfindungsgemäßen Schaltscheibe 22 bereit, d. h. zur Anschlussverbindung mit den Anschlussdrähten 16 des Temperaturwächters 18 bzw. den Verbindungsabschnitten 54 der weiteren Kontaktelemente 50 bzw. 52.

## Patentansprüche

1. Stator (1) für einen als Außenlaüfermotor ausgeführten Elektromotor, mit einem mit einer Statorwicklung (8) versehenen Statorblechpaket (2) und mit einer auf einer Stirnseite im Bereich eines Wickelkopfes (9) der Statorwicklung (8) angeordneten Verschaltungsanordnung (20) zum elektrischen Verschalten von Wicklungsdrahtenden der Statorwicklung (8) und von Anschlussdrähten (16) eines der Statorwicklung (8) vorgeschalteten Temperaturwächters (18),
**dadurch gekennzeichnet, dass** die Verschaltungsanordnung (20) eine den Bereich des Wickelkopfes (9) kappenartig übergreifende, isolierende Schaltscheibe (22) aufweist, und dass der Temperaturwächter (18) derart integriert in der Schaltscheibe (22) gehalten ist, dass er wickelkopfseitig in wärmeleitendem Anlagekontakt mit der Statorwicklung (8) zwischen dieser und der Schaltscheibe (22) sitzt, wobei der Temperaturwächter (18) mit einer federelastischen Andruckkraft (F) beaufschlagt ist und die Schaltscheibe (22) im Bereich des Temperaturwächters (18) einen die Andruckkraft (F) erzeugenden Federarm (34) aufweist, der durch eine etwa U-förmige Aussparung im Bereich einer Wandung der Schaltscheibe (22) gebildet ist.

2. Stator nach Anspruch 1,
**dadurch gekennzeichnet, dass** der Temperaturwächter (18) mittels seiner Anschlussdrähte (16) in der Schaltscheibe (22) fixiert ist, wozu die Schaltscheibe (22) auf ihrer dem Stator-Wickelkopf (9) zugewandten Statorseite Fixierelemente (24) zur Aufnahme und klemmenden Halterung der Anschlussdrähte (16) aufweist.

3. Stator nach Anspruch 1 oder 2,
**dadurch gekennzeichnet, dass** der Temperaturwächter (18) eine flache, knopfartige Form mit gegenüberliegenden, zu einer Motorachse (14) etwa senkrecht verlaufenden Anlageflächen (26, 28) und einem Umfangsrand (30) aufweist, wobei die Anschlussdrähte (16) mit einem zu den Anlageflächen (26, 28) im Wesentlichen parallelen Verlauf von dem Umfangsrand (30) ausgehen.

4. Stator nach einem der Ansprüche 1 bis 3,
**dadurch gekennzeichnet, dass** der Federarm (34) auf seiner von dem Temperaturwächter (18) wegweisenden Seite ein Anlageelement (36) zur abstützenden Anlage an einer Gegenfläche aufweist.

5. Stator nach einem der Ansprüche 1 bis 4,
**dadurch gekennzeichnet, dass** die Anschlussdrähte (16) des Temperaturwächters (18) mit Kontaktabschnitten (16a) in Schneidklemmtechnik unmittelbar oder mittelbar über zusätzliche Kontaktelemente, wie Flachstecker oder dergleichen, angeschlossen sind.

6. Stator nach einem der Ansprüche 1 bis 5,
**dadurch gekennzeichnet, dass** das Statorblechpaket (2) auf seiner der Verschaltungsanordnung (20) zugewandten Stirnseite eine Stimisolation (10) mit Aufnahmekammern (38) mit Schneidklemmkontakten (40) aufweist, wobei die Aufnahmekammern (38) mit den Schneidklemmkontakten (40) derart axial in Richtung der Schaltscheibe (22) ausgerichtet und die Kontaktabschnitte (16a) der Anschlussdrähte (16) des Temperaturwächters (18) derart an der Schaltscheibe (22) fixiert sind, dass sie durch eine axiale Fügeverbindung von Schaltscheibe (22) und Stirnisolation (10) selbsttätig in jeweils einen der Schneidklemmkontakte (40) eingeführt sind.

7. Stator nach Anspruch 6,
**dadurch gekennzeichnet, dass** jeder Anschlussdraht (16) des Temperaturwächters (18) mit seinem Kontaktabschnitt (16a) insbesondere mit radialem Verlauf über Abstützpunkte (42) geführt und fixiert ist.

8. Stator nach Anspruch 6 oder 7,
**dadurch gekennzeichnet, dass** jeder Anschlussdraht (16) in Verlängerung des Kontaktabschnittes (16a) mit seinem Ende um 180° durch eine Öffnung (44) der Schaltscheibe (22) auf deren gegenüberliegende, vom Statorblechpaket (2) wegweisende Seite geführt und dort fixiert ist.

9. Stator nach einem der Ansprüche 1 bis 8,
**dadurch gekennzeichnet, dass** an der Schaltscheibe (22) zusätzliche Kontaktelemente als Anschlusskontakte (50) für äußere Anschlussleitungen und/oder als Kontaktbrücke (52) zwischen mindestens zwei Verschaltungspunkten gehaltert sind.

10. Stator nach Anspruch 9,
**dadurch gekennzeichnet, dass** die Kontaktelemente (50, 52) flachsteckerartige Verbindungsabschnitte (54) derart aufweisen, dass diese jeweils direkt in einen der Schneidklemmkontakte (40) der Stator-Stirnisolation (10) eingreifen.

11. Stator nach Anspruch 9 oder 10,
**dadurch gekennzeichnet, dass** die vorzugsweise stiftförmigen und axial verlaufenden Anschlusskontakte (50) in die aus Kunststoff bestehende Schaltscheibe (22) bereichsweise eingespritzt oder eingepresst sind.

12. Stator nach einem der Ansprüche 9 bis 11,
**dadurch gekennzeichnet, dass** dieKontaktbrücke(52)alseinin eine Aufnahme der Schaltscheibe (22) positionsgenau eingesetztes, bevorzugt aus einem Blechmaterial bestehendes Flachleiterelement mit jeweils etwa rechtwinkling umgebogenen Verbindungsabschnitten (54) ausgebildet ist.

13. Stator nach einem der Ansprüche 6 bis 12,
**dadurch gekennzeichnet, dass** die Wicklungsdrahtenden der Statorwicklung (8) durch jeweils eine der Aufnahmekammern (38) der Stator-Stirnisolation (10) geführt und über den jeweiligen Schneidklemmkontakt (40) elektrisch kontaktiert sind.

14. Schaltscheibe (22) für einen Stator (1) nach einem der Ansprüche 1 bis 13.

15. Elektro-Außenläufermotor, mit einem Stator (1) nach einem der Ansprüche 1 bis 13 und mit einem glockenartigen, das bewickelte Statorblechpaket (2) übergreifenden Rotor.

## Claims

1. A stator (1) for an electric motor constructed in the form of an external rotor motor, with a stator laminated core (2) provided with a stator winding (8) and with a switch arrangement (20) arranged on an end face in the region of a winding head (9) of the stator winding (8) for the electrical connexion of ends of winding wires of the stator winding (8) and of terminal wires (16) of a temperature monitor (18) connected in front of the stator winding (8), **characterized in that** the switch arrangement (20) has an insulating switch disc (22) engaging over the region of the winding head (9) in the manner of a cap, and the temperature monitor (18) is held integrated in the switch disc (22) in such a way that it is mounted on the side the winding head in a thermally conducting abutment contact with the stator winding (8) between the latter and the switch disc (22), wherein the temperature monitor (18) is acted upon with a spring-resilient contact force (F) and in the region of the temperature monitor (18) the switch disc (22) has a spring arm (34) which produces the contact force (F) and which is formed by a substantially U-shaped cut-out in the region of a wall of the switch disc (22).

2. A stator according to Claim 1, **characterized in that** the temperature monitor (18) is fixed in the switch disc (22) by means of its terminal wires (16), for which purpose the switch disc (22) has fixing elements (24) on its stator side facing the winding head (9) of the stator in order to receive the terminal wires (16) and hold them in a clamped manner.

3. A stator according to Claim 1 or 2, **characterized in that** the temperature monitor (18) has a flat, knob-like shape with opposed abutment faces (26, 28) extending substantially at a right angle to a motor axis (14) and with a peripheral edge (30), wherein the terminal wires (16) extend from the peripheral edge (30) with a course substantially parallel to the abutment faces (26, 28).

4. A stator according to any one of Claims 1 to 3, **characterized in that** on its side facing away from the temperature monitor (18) the spring arm (34) has an abutment element (36) for supporting abutment on an opposed face.

5. A stator according to any one of Claims 1 to 4, **characterized in that** the terminal wires (16) of the temperature monitor (18) are attached to contact portions (16a) in an insulation displacement connexion in a direct manner or in an indirect manner by way of additional contact elements, such as flat-cable plugs or the like.

6. A stator according to any one of Claims 1 to 5, **characterized in that** on its end face towards the switch arrangement (20) the stator laminated core (2) has an end-face insulation (10) with receiving chambers (38) with insulation displacement contacts (40), wherein the receiving chambers (38) with the insulation displacement contacts (40) are orientated axially in the direction of the switch disc (22) in such a way and the contact portions (16a) of the terminal wires (16) of the temperature monitor (18) are fixed on the switch disc (22) in such a way that they are inserted automatically into one of the insulation displacement contacts (40) in each case through an axial join on the switch disc (22) and the end-face insulation (10).

7. A stator according to Claim 6, **characterized in that** each terminal wire (16) of the temperature monitor (18) is guided with its contact portion (16a) in particular with a radial course over support points (42) and is fixed.

8. A stator according to Claim 6 or 7, **characterized in that** each terminal wire (16) is guided as a continuation of the contact portion (16a) with its end guided through 180° through an opening (44) in the switch disc (22) on its opposite side facing away from the stator laminated core (2) and is fixed there.

9. A stator according to any one of Claims 1 to 8, **characterized in that** additional contact elements in the form of terminal contacts (50) for external terminal lines and/or in the form of a contact bridge (52) between at least two switch points are held on the switch disc (22).

10. A stator according to Claim 9, **characterized in that** the contact elements (50, 52) have connecting portions (54) in the manner of flat-cable plugs in such a way that the latter engage directly in one of the insulation displacement contacts (40) of the end-face insulation (10) of the stator in each case.

11. A stator according to Claim 9 or 10, **characterized in that** the terminal contacts (50) which are preferably in the form of pins and which extend axially are injection-moulded or pressed locally into the switch disc (22) which consists of plastics material.

12. A stator according to any one of Claims 9 to 11, **characterized in that** the contact bridge (52) is constructed in the form of a flat conductor element inserted in a precise position in a receiving means in the switch disc (22) and preferably consisting of a sheet-metal material and having connecting portions (54) bent over substantially at a right angle in each case.

13. A stator according to any one of Claims 6 to 12, **characterized in that** the ends of the wires of the stator winding (8) are guided through one of the receiving chambers (38) of the end-face insulation (10) of the stator in each case and are contacted electrically by way of the respective insulation displacement contact (40).

14. A switch disc (22) for a stator (1) according to any one of Claims 1 to 13.

15. An electric external rotor motor, with a stator (1) according to any one of Claims 1 to 13 and with a bell-like rotor engaging over the wound stator laminated core (2).

## Revendications

1. Stator (1) pour un moteur électrique conçu comme moteur à induit extérieur, comprenant un paquet de tôles de stator (2) doté d'un enroulement statorique (8) et un agencement de câblage (20) disposé sur un côté avant dans la zone d'une tête d'enroulement (9) de l'enroulement stator (8) pour le câblage électrique d'extrémités de fil d'enroulement de l'enroulement statorique (8) et de fils de raccordement (16) d'un contrôleur de température (18) monté en amont de l'enroulement statorique (8),
**caractérisé en ce que** l'agencement de câblage (20) présente un disque de commutation (22) isolant et recouvrant à la façon d'un capuchon la zone de la tête d'enroulement (9), et **en ce que** le contrôleur de température (18) est maintenu intégré dans le disque de commutation (22) de telle sorte qu'il vient côté tête d'enroulement en contact d'appui thermoconducteur avec l'enroulement statorique (8) entre celui-ci et le disque de commutation (22), le contrôleur de température (18) étant sollicité avec une force d'appui (F) élastique comme un ressort et le disque de commutation (22) présentant un bras de ressort (34) générant la force d'appui (F) dans la zone du contrôleur de température (18), lequel bras est formé par un évidement par exemple en U dans la zone d'une paroi du disque de commutation (22).

2. Stator selon la revendication 1,
**caractérisé en ce que** le contrôleur de température (18) est fixé au moyen ses fils de raccordement (16) dans le disque de commutation (22), le disque de commutation (22) présente en conséquence sur son côté de stator tourné vers la tête d'enroulement du stator (9) des éléments de fixation (24) pour le logement et la fixation par serrage des fils de raccordement (16).

3. Stator selon la revendication 1 ou 2,
**caractérisé en ce que** le contrôleur de température (18) présente une forme plate en forme de bouton avec des surfaces d'appui (26, 28) opposées, perpendiculaires à un axe de moteur (14) et un bord périphérique (30), les fils de raccordement (16) partant du bord périphérique (30) avec un tracé sensiblement parallèle aux surfaces d'appui (26, 28).

4. Stator selon l'une quelconque des revendications 1 à 3,
**caractérisé en ce que** le bras de ressort (34) présente sur un côté partant du contrôleur de température (18) un élément d'appui (36) pour l'appui de soutien sur une contre-surface.

5. Stator selon l'une quelconque des revendications 1 à 4,
**caractérisé en ce que** les fils de raccordement (16) du contrôleur de température (18) sont raccordés avec des tronçons de contact (16a) dans une technique à borne guillotine directement ou indirectement au moyen d'éléments de contact supplémentaires comme des fiches plates ou similaires.

6. Stator selon l'une quelconque des revendications 1 à 5,
**caractérisé en ce que** le paquet de tôles stator (2) présente sur sa face avant tournée vers l'agencement de câblage (20) une isolation frontale (10) avec des chambres de logement (38) dotées de contacts à borne guillotine (40), les chambres de logement (38) étant orientées avec les contacts à borne guillotine (40) axialement dans la direction du disque de commutation (22) et les tronçons de contact (16a) des fils de raccordement (16) du contrôleur de température (18) sont fixés sur le disque de commutation (22) de telle sorte qu'ils sont introduits par une liaison d'assemblage axial du disque de commutation (22) et de l'isolation frontale (10) automatiquement dans respectivement l'un des contacts à borne guillotine (40).

7. Stator selon la revendication 6,
**caractérisé en ce que** chaque fil de raccordement (16) du contrôleur de température (18) est guidé et fixé par sa partie de contact (16a) en particulier avec un tracé radial au moyen de points de soutien (42).

8. Stator selon la revendication 6 ou 7,
**caractérisé en ce que** chaque fil de raccordement (16) est guidé dans le prolongement de la partie de contact (16a) par son extrémité de 180° à travers une ouverture (44) du disque de commutation (22) sur son côté opposé, partant du paquet de tôles de stator (2) et est fixé à cet endroit.

9. Stator selon l'une quelconque des revendications 1 à 8,
**caractérisé en ce que** sur le disque de commutation (22) sont fixés des éléments de contact supplémentaires comme contact de raccordement (50) pour des lignes de raccordement extérieures et/ou comme pont de contact (52) entre au moins deux points de câblage.

10. Stator selon la revendication 9,
**caractérisé en ce que** les éléments de contact (50, 52) présentent des tronçons de liaison (54) de type fiche plate de telle sorte que ces tronçons s'engagent respectivement directement dans l'un des contacts à borne guillotine (40) de l'isolation frontale de stator (10).

11. Stator selon la revendication 9 ou 10,
**caractérisé en ce que** des contacts de raccordement (50) de préférence en forme de broche et agencés axialement sont injectés ou enfoncés par endroits dans le disque de commutation (22) à base de plastique.

12. Stator selon l'une quelconque des revendications 9 à 11,
**caractérisé en ce que** le pont de contact (52) est réalisé sous la forme d'un élément de conducteur plat inséré avec une position précise dans un logement de disque de commutation (22) est de préférence à base d'un matériau de tôle avec des tronçons de liaison (54) pliés respectivement à peu près à angle droit.

13. Stator selon l'une quelconque des revendications 6 à 12,
**caractérisé en ce que** les extrémités de fil d'enroulement de l'enroulement statorique (8) sont guidées à travers respectivement l'une des chambres de logement (38) de l'isolation frontale de stator (10) et sont mises en contact électrique par le contact à borne guillotine (40) respectif.

14. Disque de commutation (22) pour un stator (1) selon l'une quelconque des revendications 1 à 13.

15. Moteur électrique à induit extérieur comprenant un stator (1) selon l'une quelconque des revendications 1 à 13 et un rotor en forme de cloche et recouvrant le paquet de tôles de stator (2) enroulé.
